Europäisches Patentamt

European Patent Office

Office européen des brevets

(19)

(11) EP 0 563 370 B1

(12) FASCICULE DE BREVET EUROPEEN

(45) Date de publication et mention
de la délivrance du brevet:
**16.07.1997 Bulletin 1997/29**

(21) Numéro de dépôt: **92923414.4**

(22) Date de dépôt: **19.10.1992**

(51) Int Cl.6: **H04B 1/18**

(86) Numéro de dépôt international:
**PCT/NL92/00186**

**WO 93/08648 (29.04.1993 Gazette 1993/11)**

(54) **DISPOSITIF SEMI-CONDUCTEUR INCLUANT PLUSIEURS BLOCS FONCTIONNELS AVEC CHACUN UNE LIGNE DE DISTRIBUTION DE TENSION CONTINUE**

Halbleitergerät mit mehreren funktionellen Blöcken, jeder Block mit einer Gleichspannungsverteilungsleitung

SEMICONDUCTOR DEVICE INCLUDING A PLURALITY OF FUNCTIONAL BLOCKS EACH HAVING A DC VOLTAGE SUPPLY LINE

(84) Etats contractants désignés:
**DE FR GB IT**

(30) Priorité: **18.10.1991 FR 9112919**

(43) Date de publication de la demande:
**06.10.1993 Bulletin 1993/40**

(73) Titulaire: **Philips Electronics N.V.
5621 BA Eindhoven (NL)**

(72) Inventeurs:
- **CAUX, Christian
  F-92250 La Garenne-Colombes (FR)**
- **GAMAND, Patrice
  F-91330 Yerres (FR)**

(74) Mandataire: **Lottin, Claudine et al
Société Civile S.P.I.D.
156, Boulevard Haussmann
75008 Paris (FR)**

(56) Documents cités:
**EP-A- 0 283 074          FR-A- 2 565 031**

- **IEEE TRANSACTIONS ON MICROWAVE THEORY AND TECHNIQUES vol. MTT31, no. 12, Décembre 1983, NEW YORK, US pages 1089 - 1096 S HORI ET AL. 'GaAs Monolithic MICs for Direct Broadcast Satellite Receivers'**
- **GA AS IC SYMPOSIUM, TECHNICAL DIGEST 1985 Novembre 1985, NEW YORK, US pages 165 - 168 P DAUTRICHE ET AL. 'GaAs Monolithic Circuits for TV Tuners'**
- **IEEE TRANSACTIONS ON MICROWAVE THEORY AND TECHNIQUES vol. 36, no. 4, Avril 1988, NEW YORK, US pages 653 - 658 M SHIGAKI ET AL. 'One-Chip GaAs Monolithic Frequency Converter Operable to 4 GHz'**

## Description

L'invention concerne un dispositif semiconducteur incluant plusieurs blocs fonctionnels de circuits intégrés, parmi lesquels au moins un bloc amplificateur, connectés entre eux, fonctionnant en hautes et hyperfréquences, avec des fréquences différentes, ces blocs comprenant au moins chacun une ligne de distribution de tension continue, des moyens de polarisation de chacun des blocs par la tension continue de sa ligne de distribution, ces blocs comprenant en outre des circuits accordés en puissance dans les domaines de fonctionnement hyperfréquences, ce dispositif comprenant des moyens pour intégrer tous les blocs fonctionnels hautes et hyperfréquences sur un même substrat, et en outre pour réaliser l'alimentation en continu de tous les blocs fonctionnels par une même et seule valeur de tension continue au moyen d'une même et seule ligne de distribution de tension continue alors commune à tous les blocs, ces moyens incluant d'une part des circuits de stabilisation en fréquence appliqués à chacun du ou des blocs fonctionnels amplificateurs individuellement et en outre à la ligne de distribution de tension continue commune, et incluant d'autre part des circuits d'auto-polarisation pour constituer les moyens de polarisation de chacun des blocs par cette tension continue unique.

L'invention trouve son application dans la réalisation de modules récepteurs d'antenne pour la réception d'émissions de télévision provenant directement d'un satellite artificiel (en anglais Direct Broadcast Satellite Receivers = DBS receivers) fonctionnant dans la bande de fréquences 11,7 à 12,2 GHz.

L'invention trouve aussi son application dans tout circuit convertisseur, par exemple dans le domaine des télécommunications, ou bien dans les systèmes sans fils embarqués.

Il est déjà connu de la publication "GaAs Monolithic MIC's for Direct Broadcast Satellite Receivers" dans IEEE TRANSACTIONS ON MICROWAVE THEORY AND TECHNIQUES, Vol.MTT 31, N°12, Dec.1983, pp.1089-1096" par SHIGEKAZU HORI et alii, un dispositif semiconducteur pour réception d'émission de télévision provenant directement d'un satellite artificiel (en anglais DBSR) comprenant plusieurs circuits parmi lesquels un amplificateur bas-bruit fonctionnant à 12 GHz (LNA), un amplificateur fonctionnant à 1 GHz (IFA), et un oscillateur local fonctionnant à 1 GHz (DRO), chacun de ces circuits hyperfréquences est intégré indépendamment des autres circuits sur un substrat en arséniure de gallium qui lui est propre. Ces circuits (MMICs) comprennent des transistors à effet de champ (FET) comme éléments actifs, dont les sources sont autopolarisées, et des capacités d'isolation en continu, de manière à pouvoir être alimentés par un même générateur de tension de polarisation.

A partir de ce générateur de tension de polarisation, chaque circuit fonctionne avec une tension de polarisation différente en utilisant des résistances d'auto-polarisaton : le circuit LNA fonctionne à $V_{DD} = 4V$, le circuit IFA fonctionne à $V_{DD} = 7V$ et le circuit DRO fonctionne à $V_{DD} = 5V$.

Il est également déjà connu de la publication "GaAs MONOLITHIC CIRCUITS FOR TV TUNERS" par Pierre DAUTRICHE et alii dans "GaAs IC Symposium, Technical Digest 1985, Nov.1985, P.165-168" un dispositif hyperfréquence monolithiquement intégré sur un substrat en arséniure de gallium (MMIC) qui comprend deux circuits pour la même application que la publication précédente. Ces deux circuits consistent en un circuit mélangeur et un circuit oscillateur local. Cette publication indique que ce dispositif intégré n'a pas encore été optimisé en 1985, et émet la conclusion qu'un progrès futur résiderait dans l'intégration de tous les circuits nécessaires à la réalisation d'un dispositif semiconducteur DBS complet sur un même substrat.

Un tel dispositif est encore connu de la publication intitulée "A low cost high performance MMIC, Low Noise Down Converter for Direct Broadcast Satellite Reception" par P. Wallace, R. Michels, J. Bayruns et alii, de la Compagnie ANADIGIGS INC., dans IEEE 1990 Microwave and Millimeter-wave Monolithic Circuit Symposium, p. 7-10.

Cette publication décrit un circuit monolithique comprenant un amplificateur bas-bruit, un filtre image, un mélangeur actif, un filtre à la fréquence intermédiaire, un amplificateur à la fréquence intermédiaire et un oscillateur local.

Ce circuit est prévu pour être très compact. Il demande en annexe, pour son fonctionnement, un résonateur diélectrique et deux alimentations continues, l'une positive à + 6 V, et l'autre négative à - 5 V. Le circuit est réalisé par un procédé incluant des transistors MESFETS en GaAs. Il est muni d'un boîtier et fabriqué en grande série pour l'application à la réception d'émissions de télévision.

Cette publication enseigne que, pour les applications grand public, il est important que le prix de revient du circuit intégré soit aussi faible que possible. Ainsi, chaque concepteur de circuits intégrés cherche à réaliser un produit qui est plus performant, ou bien au moins aussi performant mais moins coûteux, que celui de ses concurrents.

A cet effet, cette publication enseigne qu'il est nécessaire d'inclure sur le même substrat autant de fonctions que possible. C'est pourquoi, le dispositif connu inclut toutes les fonctions citées plus haut, plus les circuits de découplage et les capacités de blocage en continu.

Cependant, sont exclus du substrat le résonateur diélectrique qui est par ailleurs fixé au boîtier, et les circuits de génération des tensions d'alimentation en continu formant un circuit annexe externe de fonctionnement.

Un des buts de la présente invention est de diminuer le coût de fabrication du produit final, c'est-à-dire soit d'un système embarqué soit du module d'entrée du récepteur d'émissions de télévision provenant directement d'un satellite artificiel (DBS Receiver) incluant à la fois le circuit intégré du convertisseur de fréquences et son circuit annexe de fonctionnement, en diminuant le nombre des tensions d'alimentation en continu nécessaires au fonctionnement du circuit convertisseur.

Un but de l'invention est, à cet effet, de proposer un circuit monolithique ayant une seule alimentation en continu, par exemple + 6 V, pour tous les blocs fonctionnels, lesquels sont intégrés sur un même substrat.

En n'utilisant qu'une seule alimentation continue pour le fonctionnement du circuit monolithique, on divise par deux la complexité du circuit annexe de fonctionnement. On atteint donc le but de l'invention qui est de diminuer le coût du dispositif total. Mais on se heurte alors au problème technique qui résulte du fait que toutes les fonctions du circuit monolithique (amplificateur, filtres, oscillateur local, etc...) disposées sur le même substrat réagissent les unes sur les autres du fait qu'elles sont couplées et qu'elles ont des fréquences de fonctionnement différentes.

Le problème technique qui doit finalement être résolu consiste à réaliser la polarisation de plusieurs fonctions couplées, travaillant à des fréquences différentes, avec un ou plusieurs bloc(s) fonctionnel(s) travaillant en hyperfréquences (12 GHz), ceci en évitant que les fonctions ne réagissent les unes sur les autres par la voie de la polarisation commune. De plus, cette polarisation doit être réalisée en mettant en oeuvre des moyens très simples, c'est-à-dire des éléments de circuits très simples intégrables sur le même substrat que le convertisseur, et qui ne viennent pas grever le coût de ce dernier.

Ce problème est résolu par le dispositif selon l'invention.

A cet effet, le dispositif défini dans le préambule est caractérisé en ce que le circuit de stabilisation en fréquence appliqué à la ligne de distribution de tension continue commune comprend au moins un filtre ($R_0$ - $C_0$) appliqué à cette ligne, et en ce que, chaque bloc fonctionnel étant formé d'étages à transistors, les circuits de stabilisation en fréquence appliqués au(aux) bloc(s) amplificateur(s) comprennent au moins un filtre ($R'_0$ - $C'_0$, $R''_0$ - $C''_0$) appliqué dans au moins un des étages à transistor dudit (desdits) bloc(c) amplificateur(s).

De plus, dans l'application de l'invention à un convertisseur, en alimentant ainsi les diverses fonctions du convertisseur au moyen d'une seule alimentation, on obtient des avantages substantiels supplémentaires.

Il faut savoir que dans le domaine de la télévision, les satellites émettent sur plusieurs bandes de fréquences. A cet effet, dans le circuit d'entrée du récepteur, le résonateur diélectrique doit être réglé de manière différente pour la réception dans chacune des bandes aussi bien dans le dispositif connu du troisième document cité que dans le dispositif selon l'invention.

Un problème est que, dans le circuit connu du troisième document cité, l'amplificateur radio-fréquences a une bande de fréquences de fonctionnement étroite et le filtre est indépendant de cet amplificateur, d'où il résulte qu'il faut prévoir un circuit convertisseur différent pour chacune des bandes de fréquences d'émission des satellites, avec un amplificateur et un filtre ayant chacun une bande de fréquences de fonctionnement décalée.

Selon l'invention, à la différence, on a développé des moyens pour éviter cet inconvénient. Ainsi, pour toutes les bandes d'émission, on obtient l'avantage de pouvoir utiliser le même convertisseur. Seul le réglage du résonateur est à changer. Ceci permet de fabriquer les circuits convertisseurs en plus grande série et donc aussi d'en diminuer le coût.

A cet effet selon l'invention, dans un dispositif comprenant un amplificateur radiofréquence, et un filtre, l'amplificateur comprend des moyens pour augmenter sa largeur de bande de fonctionnement de manière à couvrir toutes les bandes d'émission. De plus, le filtre est inclus dans l'amplificateur. Ce filtre comprend un premier circuit résonant à la fréquence image la plus proche de la bande de fonctionnement et qui doit être rejetée, ainsi qu'un second circuit résonant, centré substantiellement à la même fréquence image, cependant légèrement décalé par rapport au premier pour produire un effet plus large bande de ce filtre, d'où il résulte une plus grande efficacité de filtrage. Ces circuits sont connectés entre le drain du dernier transistor de l'amplificateur et la masse.

L'invention est décrite ci-après en détail en référence avec les figures annexées dont :

- la figure 1 qui représente un schéma fonctionnel du circuit convertisseur ;
- la figure 2a qui représente un étage de l'amplificateur RFA considéré du point de vue du fonctionnement en tensions continues ;
- la figure 2b qui représente le même étage considéré du point de vue du fonctionnement en alternatif ;
- la figure 2c qui représente l'amplificateur RFA du convertisseur ainsi que le filtre passe-bande ;
- la figure 3a qui représente l'étage mélangeur du point de vue du fonctionnement en alternatif ;
- la figure 3b qui représente l'étage oscillateur du point de vue du fonctionnement en alternatif ;
- la figure 3c qui représente les étages mélangeur et oscillateur, ainsi que l'oscillateur externe du circuit convertisseur ;
- la figure 4a qui représente un étage de l'amplificateur IFA du convertisseur et la figure 4b qui représente l'amplificateur IFA du convertisseur avec l'étage tampon de sortie.

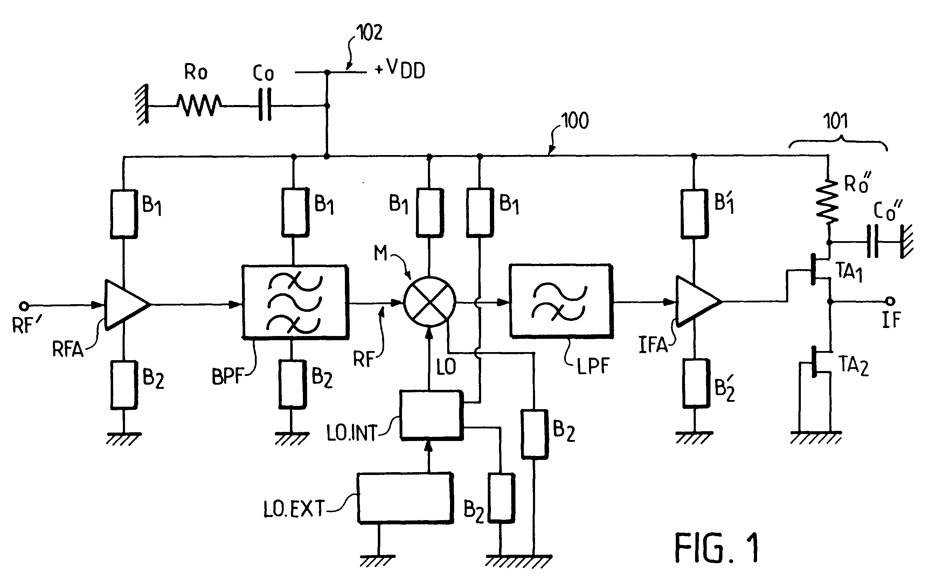

La figure 1 représente un circuit monolithique intégré hautes et hyperfréquences ayant plusieurs blocs de fonctions travaillant à des fréquences différentes et couplées entre elles. Ce circuit intégré n'a qu'un seul accès 102 pour une seule tension continue positive + $V_{DD}$, et il est muni de premiers moyens constitués par des circuits de stabilisation en fréquence comprenant au moins un circuit $R_0$-$C_0$ passe-haut de découplage de l'alimentation continue vis-à-vis de la masse et un circuit $R''_0$-$C''_0$ passe-bas de découplage du drain d'un étage 101 à transistor à effet de champ. Il est en outre muni de seconds moyens constitués par des circuits $B_1$, $B_2$ ou $B'_1$, $B'_2$, d'autopolarisation comprenant $R_1$, $R_2$ et des circuits de découplage $R'_0$-$C'_0$ et $C_2$ ; ou bien des charges actives découplées.

La tension d'alimentation + $V_{DD}$ est distribuée aux différents blocs par une ligne d'alimentation commune 100. Dans le domaine considéré des hautes et hyperfréquences, cette ligne d'alimentation commune se conduit comme une ligne de transmission et produit des rétrocouplages parasites entre les différentes fonctions, ce qui conduit à une perturbation des fréquences et à l'instabilité des blocs amplificateurs.

Selon l'invention, ces effets néfastes n'existent pas.

Ce résultat est obtenu, du fait que, d'une part, la ligne d'alimentation commune 100 est munie d'au moins un circuit de découplage commun par rapport à la masse. Ce circuit de découplage commun comprend une capacité $C_0$ disposée entre la ligne et la masse. On obtient ainsi l'élimination des rétrocouplages parasites. Ce circuit comprend en outre une résistance $R_0$ disposée en série avec la capacité $C_0$ entre cette dernière et la masse. On obtient ainsi l'élimination des oscillations.

Ce résultat est aussi obtenu du fait que, d'autre part, dans le circuit, au moins un étage à transistor à effet de champ, de préférence un étage tampon 101, est muni d'une capacité $C''_0$ de découplage de drain et d'une résistance $R''_0$ entre ce drain et la ligne d'alimentation 100. La parfaite stabilité des blocs amplificateurs du circuit intégré est alors obtenue.

Ainsi il est possible d'alimenter tous les blocs du circuit intégré au moyen de la seule ligne d'alimentation commune 100 reliée à l'accès + $V_{DD}$ 102.

Tel que représenté sur la figure 1, le circuit monolithique intégré comprend parmi ses blocs de fonctions réalisés sur le même substrat :

- un amplificateur RFA recevant un signal RF' à la fréquence radio, et fournissant le signal RF,
- un filtre passe-bande BPF qui reçoit le signal provenant de l'amplificateur RFA,
- un oscillateur local composé de deux blocs : un bloc externe au boîtier du circuit intégré, LO.EXT, qui comporte un résonateur diélectrique adaptable pour chaque bande d'application du circuit intégré et un bloc interne LO.INT qui reçoit le signal LO' du bloc externe et qui fournit le signal LO ;
- un mélangeur M qui reçoit à la fois le signal RF de la chaîne amplificateur-filtre RF, et le signal LO de l'oscillateur local, et qui fournit un signal IF' à la fréquence intermédiaire ;
- un filtre passe-bas LPF qui reçoit le signal IF',
- un amplificateur IFA à la fréquence intermédiaire, qui reçoit le signal provenant du filtre LPF et fournit le signal IF de sortie du circuit intégré, à la fréquence intermédiaire.

Ce circuit convertisseur MMIC trouve notamment son application dans un module de réception d'antenne (DBS Receiver) pour émissions de télévision retransmises par satellites artificiels. Mais il peut être utilisé pour de nombreuses applications en télécommunication ausi bien pour la réception que pour l'émission.

Pour plus de clarté de l'exposé, les différents blocs du convertisseur sont décrits séparément ci-après. Néanmoins, dans la mise en oeuvre de l'ensemble de ces blocs, on n'a fait appel qu'à deux techniques d'autopolarisation.

La première technique d'autopolarisation sera décrite en référence avec les blocs RFA, BPA, LO.INT, M et la seconde technique sera décrite en référence avec le bloc IFA.

### Exemple I : Le bloc amplificateur RFA à la fréquence radio RF

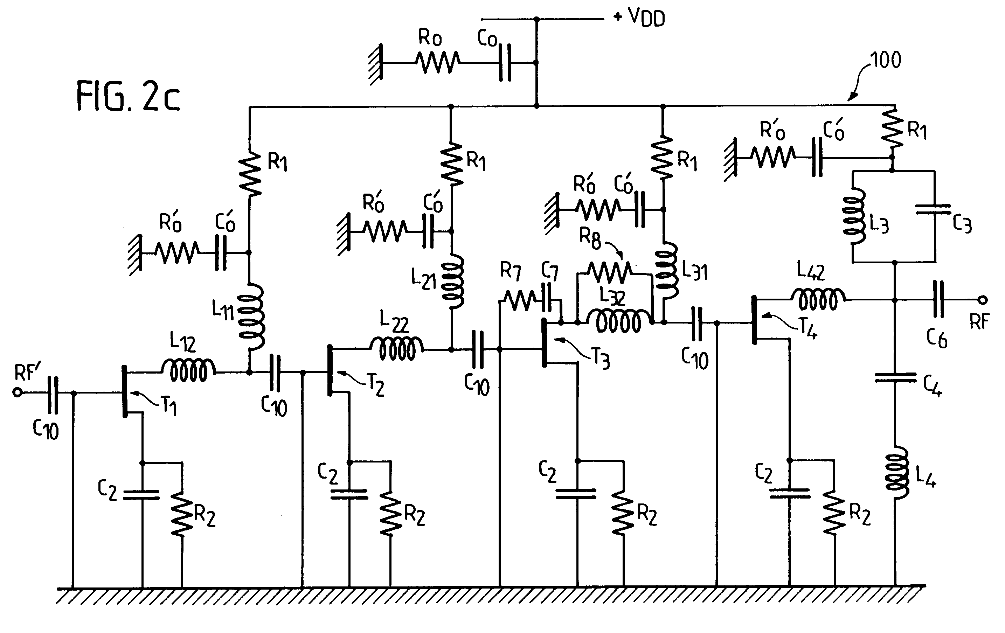

Dans le circuit intégré convertisseur de fréquences selon l'invention, l'amplificateur à la fréquence radio, RFA, est associé au filtre passe-bande BPF. Ces circuits sont représentés schématiquement sur la figure 2c.

Dans un système de réception, tel que le circuit convertisseur proposé, il est nécessaire de réaliser un bloc amplificateur placé en entrée, pour réduire le facteur de bruit. L'amplificateur peut être constitué de un ou plusieurs étages. De préférence, il a quatre étages à transistors à effet de champs $T_1$, $T_2$, $T_3$, $T_4$,

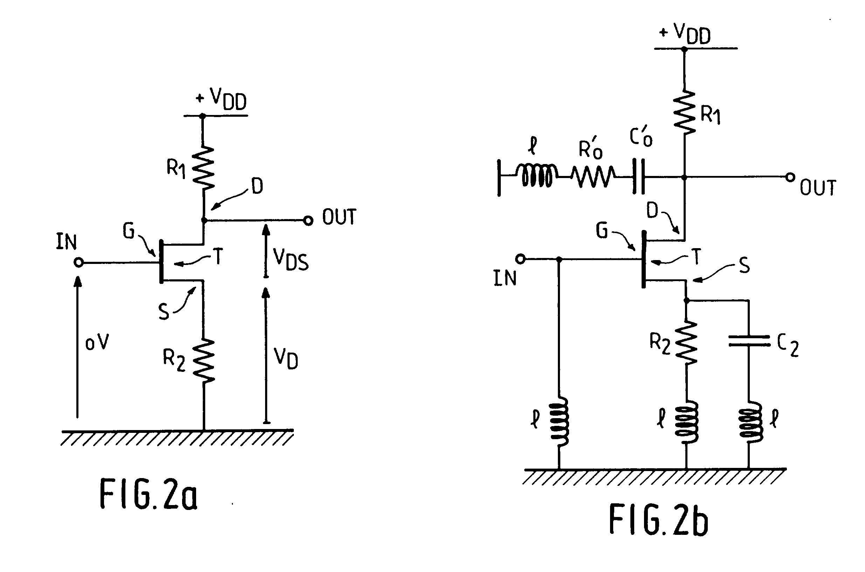

La première des techniques d'autopolarisation, qui est appliquée à l'amplificateur RFA, est décrite en référence avec les figures 2a et 2b.

Considérant un étage amplificateur du point de vue des tensions continues, tel qu'illustré par la figure 2a, un transistor à effet de champ T réalisant la fonction inverseur, a une grille G, un drain D et une source S.

Pour réaliser l'autopolarisation de ce transistor le drain D est relié à la ligne d'alimentation commune + $V_{DD}$ 100 par une résistance $R_1$, et la source S est reliée à la masse par une résistance $R_2$.

La tension aux bornes de la résistance $R_2$ fixe la tension de source $V_S$ ; la grille est placée à un potentiel continu nul $V_G = 0$ ; la tension aux bornes de la résistance $R_1$ fixe la tension de drain $V_D$ ; on obtient ainsi en fonction des valeurs des résistances $R_1$, $R_2$, et de la valeur de la tension continue + $V_{DD}$, la valeur de la tension grille-source $V_{GS}$

voulue pour chaque étage amplificateur :

$$V_{GS} = V_G - V_S = - V_S \text{ puisque } V_G = 0$$

ainsi que la valeur de la tension $V_{DS}$ drain-source nécessaire au fonctionnement de l'étage.

L'étage amplificateur représenté sur la figure 2a est ainsi autopolarisé selon ladite première technique.

Considérant le même étage amplificateur du point de vue du fonctionnement en alternatif, tel qu'illustré par la figure 2b, les résistances $R_1$ et $R_2$ sont découplées pour éviter les effets parasites c'est-à-dire les possibles oscillations, décalages de la bande de fréquences, perte de gain, etc.

Comme les mises à la masse des éléments du circuit sont faites par des fils, par exemple des fils d'or, et que ces différents éléments sont reliés entre eux par des connexions intégrées de longueur non nulle, il doit être tenu compte en alternatif de tous ces moyens de raccordements car ils forment des selfs-inductances non négligeables.

Ainsi en référence avec la figure 2b, chaque étage de l'amplificateur comprend, pour l'autopolarisation :

- le découplage de la résistance $R_2$ par la capacité $C_2$ en parallèle entre la source et la masse,
- la mise à la masse de la grille par une connexion qui fait apparaître une petite self-inductance 1.
- la mise à la masse des éléments $R_2$ et $C_2$ par des connexions qui font apparaître une petite self-inductance 1.

Et au moins les trois premiers étages de l'amplificateur comprennent,pour l'autopolarisation, en référence avec la figure 2b et avec la figure 2c :

- le découplage de la résistance $R_1$ par la capacité $C'_0$ placée entre le drain et la masse, et l'adjonction d'une résistance $R'_0$ en série avec la capacité $C'_0$ entre cette dernière et la masse. La résistance série $R'_0$ peut être de faible valeur ; elle est destinée à éliminer les oscillations parasites dues au fait que la connexion du circuit $R'_0$-$C'_0$ de découplage avec la masse forme concrètement la petite self-inductance 1.

Ainsi l'amplificateur RFA est-il inconditionnellement stable notamment grâce à la présence des résistances $R'_0$ dans les découplages de drain des étages amplificateurs à transistors.

En outre chaque étage de l'amplificateur RFA comprend en sortie, comme montré sur la figure 2c, des moyens d'adaptation entre étages.

Ces circuits d'adaptation comprennent une self-inductance $L_2$ placée en série avec une capacité de blocage $C_{10}$ entre le drain du transistor d'un étage et la grille du transistor suivant et en série avec cette self-inductance $L_2$, entre la sortie de drain et la masse une seconde self-inductance $L_1$.

Dans le calcul de la valeur de ces self-inductances $L_1$ et $L_2$, il sera tenu compte de la valeur introduite par les connexions entre éléments et qui forment en alternatif des lignes de transmission, comme il a été dit précédemment.

Le réseau d'adaptation de l'amplificateur comprend donc respectivement pour les premier, second, et troisième étages les self-inductances $L_{11}$- $L_{12}$, $L_{21}$-$L_{22}$, et $L_{31}$-$L_{32}$.

Le réseau d'adaptation de sortie du dernier étage ou quatrième étage de l'amplificateur dans le circuit représenté sur la figure 2c, contient les éléments de filtrage nécessaires à la réjection de la bande image. Ces éléments de filtrage comprennent :

- un circuit résonnant série, ayant une self-inductance $L_4$ et une capacité $C_4$,
- un circuit résonnant parallèle, ayant une self-inductance $L_3$ et une capacité $C_3$ ;

ces deux circuits sont connectés entre la sortie de drain du dernier étage de l'amplificateur RFA, et la masse. La sortie de drain de ce dernier étage comporte en outre, en série, la self-inductance $L_{42}$.

Le circuit résonant $L_3$-$C_3$ parallèle résonne à la fréquence image la plus proche de la bande de fonctionnement, et qui doit être rejetée. D'autre part, le circuit résonnant série $L_4$-$C_4$, dans lequel il faut tenir compte des tronçons de lignes de transmission constituées par les connexions entre éléments et les connexions avec la masse, résonne substantiellement à la même fréquence image, mais légèrement décalée par rapport à la fréquence du circuit résonnant parallèle $L_3$-$C_3$.

Il résulte de cette structure que le filtre ainsi constitué BPF a un effet plus large bande et une plus grande efficacité de filtrage qu'avec la structure de filtre connue de l'état de la technique.

L'optimisation du filtrage se fait au moyen de la self inductance $L_{42}$ placée sur le drain du dernier transistor $T_4$, et au moyen de la capacité de sortie $C_6$ de l'amplificateur RFA, tel que représenté sur la figure 2c.

En outre, la figure 2c montre que, dans l'adaptation du troisième étage de l'amplificateur, se trouve une résistance $R_8$ en parallèle sur l'élément de self-inductance $L_{32}$. Cette résistance $R_8$ sert à diminuer le coefficient de qualité de la

self-inductance $L_{32}$ et à augmenter ainsi la stabilité de l'amplificateur RFA.

Un moyen supplémentaire d'augmenter la stabilité de l'amplificateur RFA est fourni par la contre-réaction résistive constituée par la résistance $R_7$ disposée entre le drain et la grille du transistor $T_3$ du troisième étage de l'amplificateur RFA, en série avec la capacité de blocage $C_7$.

Des valeurs exemplatives des éléments pour réaliser le circuit de la figure 2c sont données dans le tableau I.

Avec la structure de l'amplificateur et du filtre décrits plus haut, on obtient un circuit plus large bande que le circuit connu de l'état de la technique. En conséquence, ce circuit intégré, tel que représenté sur la figure 1, peut être utilisé pour toutes les bandes de fréquences des émission de télévision actuellement retransmises par satellites artificiels. Le circuit intégré est, selon l'invention, unique pour toutes les bandes de fréquences. Seul le réglage du résonateur diélectrique externe sera à changer d'un boîtier à l'autre pour son utilisation sur les différentes bandes de fréquences.

D'une manière différente, le circuit connu de l'état de la technique ne pouvait être utilisé que sur une seule bande de fréquences de retransmission des émissions de télévision et dans l'état actuel de la technique, il était nécessaire de disposer d'environ 3 circuits intégrés différents pour couvrir les différentes bandes de fréquences de retransmission.

Exemple II : **Le mélangeur**

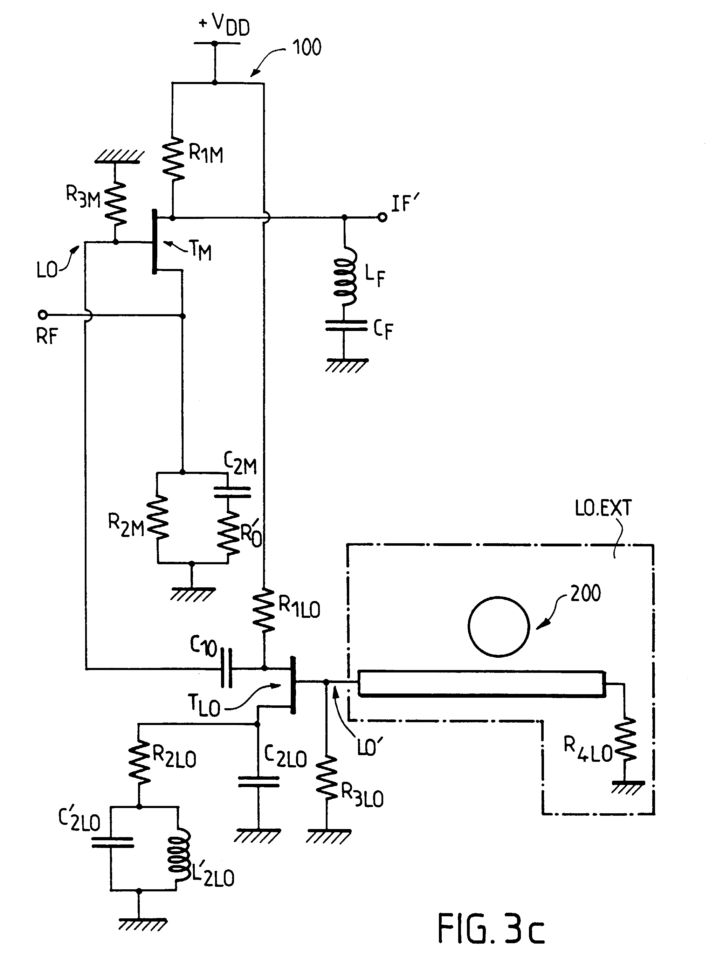

Le circuit mélangeur M, et la partie intégrée de l'oscillateur local LO.INT sont représentés sur la figure 3c.

Le circuit mélangeur M comprend un transistor à effet de champ $T_M$ auquel est appliquée ladite première technique d'autopolarisation déjà décrite en référence avec les figures 2a et 2b.

La structure d'autopolarisation appliquée au mélangeur M est illustrée par la figure 3a et comporte une résistance $R_{1M}$ disposée entre le drain du transistor $T_M$ et la ligne d'alimentation commune 100. Cette résistance $R_{1M}$ n'est pas découplée. Cette structure d'autopolarisation comporte aussi une résistance $R_{2M}$ disposée entre la source du transistor $T_M$ et la masse. Cette résistance $R_{2M}$ est découplée, comme connu de l'exposé ci-dessus, par une capacité $C_{2M}$, et dans ce cas une résistance $R'_0$, destinée à éviter les oscillations, est placée en série avec la capacité $C_{2M}$ entre cette dernière et la masse.

Pour le calcul des éléments du système d'autopolarisation du mélangeur, il devra être tenu compte des longueurs et dimensions des connexions des éléments entre et des éléments avec la masse, sous la forme des faibles self-inductances 1 déjà décrites.

L'amplificateur RFA à la fréquence radio injecte le signal RF, par l'intermédiaire de son dernier réseau d'adaptation, dans la source du transistor $T_M$ utilisé pour le mélange des fréquences, et un signal LO provenant de l'oscillateur local (LO.INT + LO.EXT) est injecté directement sur l'électrode de grille de ce même transistor, comme cela est montré sur la figure 3c.

Le mélange des premier et second signaux permet d'obtenir un signal à la fréquence intermédiaire IF :

$$IF = |RF-LO|$$

Dans l'exemple d'application à la télévision retransmise par satellite,

$$RF \simeq 12 \, GHz$$

$$LO \simeq 10 \, GHz$$

$$IF \simeq 2 \, GHz$$

Exemple III : **L'oscillateur local**

Ce circuit oscillateur est représenté sur la figure 3c. Il comprend une partie externe au boîtier du circuit intégré, désignée par LO.EXT.

Cette partie externe comporte un résonateur diélectrique 200 qui doit être ajusté pour chaque fréquence et qui est réalisé sur un substrat, ainsi qu'une résistance $R_{4LO}$. Cette partie ne concerne pas l'invention.

L'oscillateur local comprend aussi une partie interne LO.INT réalisée sur le substrat du circuit intégré du convertisseur, incluant un transistor à effet de champ $T_{LO}$, alimenté en continu par + $V_{DD}$ par la ligne commune 100.

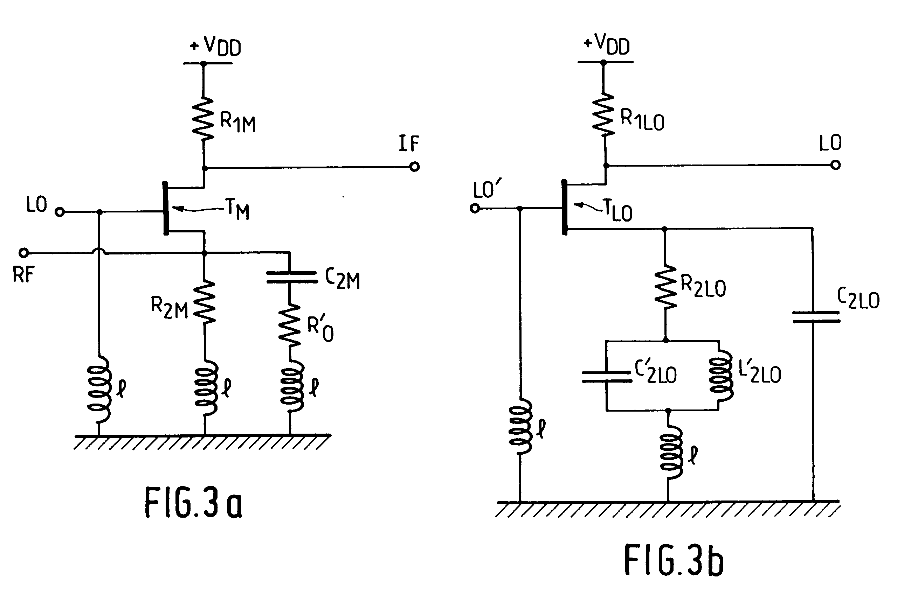

En conséquence, le bloc LO.INT comporte des moyens d'autopolarisation du transistor $T_{LO}$ qui sont illustrés par la figure 3b et qui sont du type déjà décrit précédemment.

EP 0 563 370 B1

La structure d'autopolarisation appliquée à LO.INT comporte, en référence avec les figures 3b et 3c, une résistance $R_{1LO}$ disposée entre le drain et la ligne d'alimentation commune 100, et au moins une résistance $R_{2LO}$ disposée sur la source du transistor $^{T}LO$.

Par ailleurs la structure de l'oscillateur LO.INT comporte le transistor $T_{LO}$ ayant une capacité $C_{2LO}$ dans sa source pour générer une résistance négative.

L'électrode de drain du transistor $T_{LO}$ constitue la sortie LO de l'oscillateur et est directement connectée à l'entrée LO du mélangeur M.

L'électrode de grille reçoit le signal LO' du résonateur externe LO.EXT, qui fixe la fréquence d'oscillation.

Pour préserver à la fois la stabilité du circuit convertisseur dans son ensemble, et l'efficacité de l'oscillateur, on trouve dans la source du transistor $T_{LO}$, un circuit résonnant dans la bande d'utilisation de l'oscillateur LO.INT. Ce circuit résonnant est du type parallèle, et comprend la self-inductance $L'_{2LO}$ et la capacité $C'_{2LO}$. Il est placé en série avec la résistance d'autopolarisation $R_{2LO}$ et effectue son découplage. En effet, il n'est pas possible dans l'oscillateur local, LO.INT, d'utiliser exactement le même type de découplage de source que celui qui avait été décrit plus haut en référence avec la figre 2b, pour l'amplificateur RFA. En effet, l'effet de la capacité $C_{2LO}$ réalisant la résistance négative ne doit pas être perturbé. Le circuit $L'_{2LO}$-$C'_{2LO}$ présente l'avantage de ne pas perturber l'effet de la capacité $C_2$, et d'être peu sensible à la présence des connexions de masse qui réalisent des petites self-inductances 1. Dans le cas présent, c'est donc à la fois la résistance $R_{2LO}$ et le circuit $L_{2LO}$-$C'_{2LO}$ disposés entre la source et la masse qui conditionnent la tension continue de source $V_S$.

Ainsi à la fréquence de résonnance du circuit $L'_{2LO}$ - $C'_{2LO}$, le circuit est ouvert et la capacité $C_2$ ne voit pas du tout le circuit d'autopolarisation. Donc la capacité $C_2$ n'est pas modifiée et il en résulte qu'elle présente la valeur correcte pour produire la résistance négative appropriée.

La figure 3c montre aussi le bloc LPF filtre passe-bas. Ce dernier est simplement constitué d'un circuit résonnant série formé de la self-inductance $L_F$ et de la capacité $C_F$ montées en série entre le drain du transistor mélangeur $T_M$ et la masse.

Ce filtre $L_F$ -$C_F$ est utilisé pour supprimer l'injection de signal à la fréquence LO de l'oscillateur local, dans le reste de la chaîne du convertisseur.

Par ailleurs, on notera que le circuit résonnant $L'_{2LO}$-$C'_{2LO}$ parallèle peut être remplacé par un circuit résonnant série pourvu que ce dernier conduise au même résultat.

Le dernier bloc du convertisseur décrit ci-après dans l'exemple suivant bénéficie d'un second système d'autopolarisation.

Des valeurs pour réaliser les blocs décrits dans cet exemple sont données dans le tableau II.

## Exemple IV : **L'amplificateur IFA à la fréquence intermédiaire.**

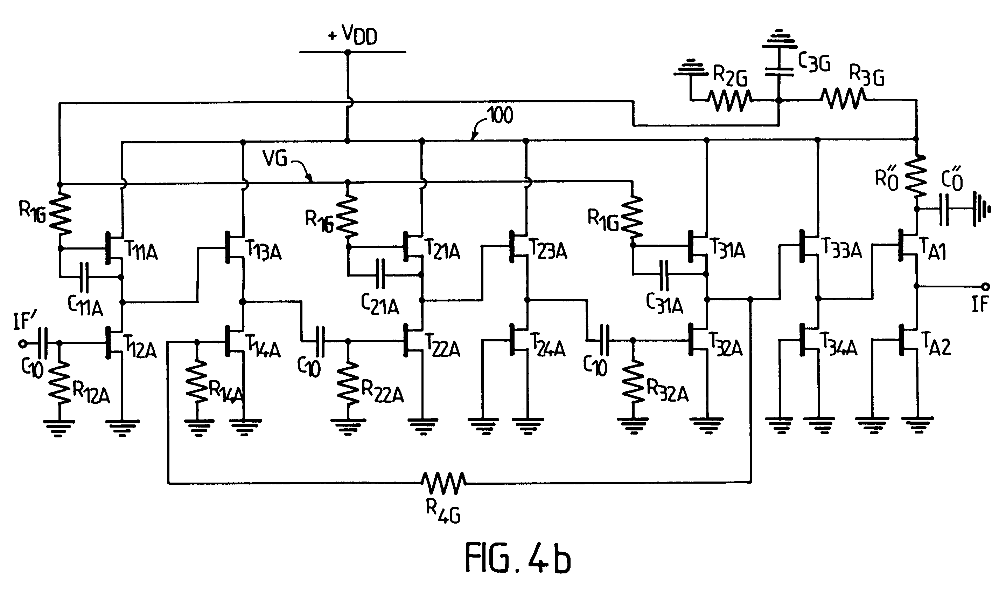

Le circuit amplificateur IFA à la fréquence intermédiaire est représenté sur la figure 4b.

La fréquence de fonctionnement de ce circuit qui reçoit le signal IF issu du mélangeur est relativement basse . Sa structure a été conçue pour réaliser une amplification en tension.

Ainsi la sortie du mélangeur est directement connectée, à travers une capacité $C_{10}$ de liaison, à un étage inverseur-tampon. En tout, 3 de ces étages inverseurs-tampons seront utilisés.

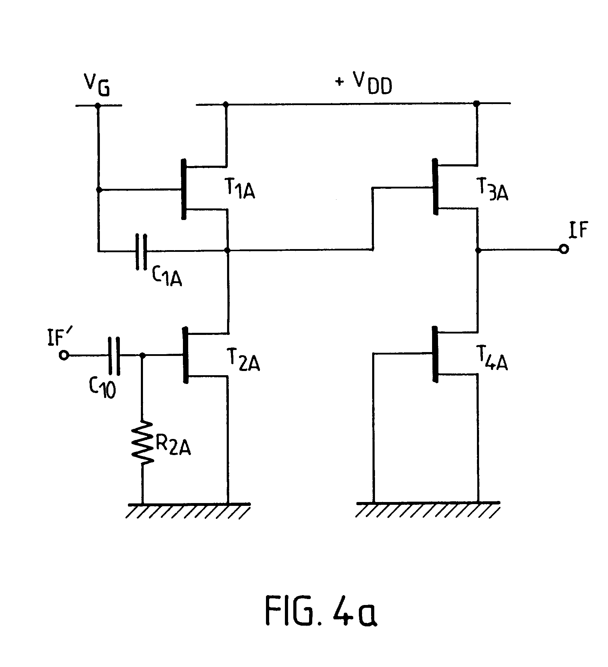

Chacun des étages inverseurs-tampons est autopolarisé. Le système d'autopolarisation d'un tel étage est illustré par la figure 4a. La polarisation du circuit IFA est faite à partir de la ligne d'alimentation commune 100.

En référence avec la figure 4a, un étage comporte un transistor $T_{2A}$ formant un inverseur et ayant une charge active $T_{1A}$, source de courant, polarisé à $V_{GS} = 0$. L'étage comporte en outre un transistor $T_{3A}$ formant avec le transistor $T_{4A}$ un tampon. Le transistor $T_{4A}$ est monté en source de courant, et polarisé à $V_{GS} = 0$. Le transistor $T_{3A}$ est monté en drain commun à l'alimentation commune en tension 100.

Le circuit formé par la capacité $C_{1A}$ disposée entre la grille et la source du transistor de charge $T_{1A}$, et par la résistance $R_{2A}$ disposée entre la grille et la masse du transistor inverseur $T_{2A}$ permet par le choix des valeurs de ces éléments d'ajuster la fréquence de coupure basse du circuit.

Il faut noter que l'on utilise pour la polarisation, une tension d'alimentation continue + $V_G$ inférieure à + $V_{DD}$, mais néanmoins positive, qui met en oeuvre un pont de résistances $R_{2G}$, $R_{3G}$, $R_{4G}$ et $R_{1G}$.

Afin d'adapter la sortie de l'amplificateur IFA à sa charge, un étage tampon 101 supplémentaire est utilisé comme montré sur la figure 4b.

Pour assurer la stabilité de l'amplificateur IFA, une résistance $R"_0$ est introduite entre le drain du transistor $T_{A1}$ de ce dernier étage tampon, monté en drain commun et la ligne d'alimentation commune 100. Une capacité de découplage $C"_0$ est également introduite dans ce même drain. Ces deux éléments sont nécessaires pour rendre stable l'ensemble du mélangeur M et de l'amplificateur IFA.

Des valeurs pour réaliser le bloc décrit dans cet exemple sont données dans le tableau III.

Ainsi, au moyen des deux circuits de stabilisation en fréquences du convertisseur,

$$R_0\text{-}C_0$$

et

$$R''_0\text{-}C''_0$$

ainsi que de techniques d'autopolarisation appliquées individuellement à chacun des blocs, mettant en oeuvre des étages à transistor, le circuit convertisseur décrit, ou tout circuit présentant un problème technique semblable, peut être polarisé en n'utilisant qu'un accès pour une tension continue, et peut avoir une ligne d'alimentation commune à tous les blocs.

Ainsi l'invention s'applique à tout circuit intégré monolithique ayant plusieurs blocs fonctionnels couplés, travaillant en haute et/ou hyperfréquences, et ayant une ligne d'alimentation en tension continue, et une ligne de masse. Le problème est résolu lorsque dans ce circuit la ligne de distribution est une ligne commune qui alimente avec la même tension continue tous les blocs fonctionnels couplés, lesquels sont munis de moyens de polarisation par cette tension continue, et qu'il comprend des circuits de stabilisation en fréquence des blocs fonctionnels, incluant au moins un circuit de découplage de la ligne commune par rapport à la masse avec une capacité et une résistance en série entre la ligne et la masse, et un circuit de découplage de drain d'un étage à transistor avec une résistance entre le drain du transistor et la ligne commune et une capacité entre le drain et la masse.

Le concepteur de circuit intégré est donc dispensé de générer la tension continue négative qui était nécessaire au circuit connu de l'état de la technique.

On peut noter que l'on peut prévoir sur l'ensemble du substrat non pas seulement un circuit $R_0\text{-}C_0$ mais 2 de tels circuits, disposés entre la ligne commune 100 et la masse. Les résultats ne peuvent qu'être améliorés.

Le tableau IV donne les valeurs préférées pour réaliser ces circuits de stabilisation.

Pour réaliser une self-inductance intégrée, le concepteur de circuit prévoit un ruban conducteur enroulé. Dans les tableaux on caractérise les selfs par la largeur du ruban conducteur/la longueur du ruban conducteur en µm.

TABLEAU I

| ELEMENTS DE L'AMPLIFICATEUR R F A | | |
|---|---|---|
| Capacités | Résistances | Selfs-Inductances |
| $C_{10} \simeq 1pF$ | $R_1 \simeq 200\Omega$ | $L_{11} \simeq 10/1100$ (µm/µm) |
| $C_2 \simeq 5pF$ | $R_2 \simeq 25\Omega$ | $L_{12} \simeq 10/1000$ (µm/µm) |
| $C'_0 \simeq 5pF$ | $R'0 \simeq 25\Omega$ | $L_{21} \simeq 10/1350$ (µm/µm) |
| $C_7 \simeq 0,1pF$ | $R_7 \simeq 10k\Omega$ | $L_{22} \simeq 10/1300$ (µm/µm) |
| $C_4 \simeq 0,15pF$ | $R_8 \simeq 1k\Omega$ | $L_{31} \simeq 5/400$ (µm/µm) |
| $C_6 \simeq 0,3\ pF$ | | $L_{32} \simeq 5/1400$ (µm/µm) |
| | | $L_3 \simeq 10/1600$ (µm/µm) |
| | | $L_{42} \simeq 5/550$ (µm/µm) |
| | | $L_4 \simeq 5/1200$ (µm/µm) |
| Longueur de grille des transistors (Lg) | | |
| Lg $(T_1) = 300$ µm | | |
| Lg $(T_2) = 160$ µm | | |
| Lg $(T_3) = 160$ µm | | |
| Lg $(T_4) = 160$ µm | | |

TABLEAU II

| Eléments du mélangeur M, de l'oscillateur local et du filtre passe-bas | | |
|---|---|---|
| Longueur de grille des transistors | | |
| $L_g(T_M) = 200\ \mu$ | $L_g(T_{LO}) = 200\ \mu$ | |
| Capacités | Résistances | Self-Inductances |
| $C_{2M} = 5\ pf$<br>$C_{2LO} = 0,1\ pf$<br>$C'_{2LO} = 0,25\ pf$<br>$C_{10} \simeq 3\ pf$<br>$C_F = 0,1\ pf$ | $R_{2M} \simeq 700\ \Omega$<br>$R'_0 \simeq 25\ \Omega$<br>$R_{3LO} \simeq 10\ k\Omega$<br>$R_{3M} \simeq 5\ k\Omega$<br>$R_{1M} \simeq 1\ k\Omega$<br>$R_{1LO} \simeq 110\ \Omega$ | $L'_{2LO} = 10/100\ (\mu/\mu)$<br>$L_F = 5/1200\ (\mu/\mu)$ |

## TABLEAU III

| Eléments de l'amplificateur I F A | | |
|---|---|---|
| Longueur de grille des transistors (Lg) | Résistances | Capacités |
| Lg $(T_{11})$ = 40 µm    Lg $(T_{13})$ = 40<br>Lg $(T_{12})$ = 40 µm    Lg $(T_{14})$ = 20<br>Lg $(T_{21})$ = 20 µm    Lg $(T_{23})$ = 30<br>Lg $(T_{22})$ = 20 µm    Lg $(T_{24})$ = 15<br>Lg $(T_{31})$ = 20 µm    Lg $(T_{33})$ = 30<br>Lg $(T_{32})$ = 20 µm    Lg $(T_{34})$ = 15<br>Lg $(T_{A1})$ = 100 µm    Lg $(T_{A2})$ = 40 µm | $R_{12}$ = 2 kΩ<br>$R_{14}$ = 10 kΩ<br>$R_{22}$ = 10 kΩ<br>$R_{32}$ = 10 kΩ<br>$R_{1G}$ = 2 kΩ<br>$R_{2G}$ = 5 kΩ<br>$R_{3G}$ = 5 kΩ<br>$R_{4G}$ = 4 kΩ | $C_{11}$ = 0,3 pF<br>$C_{20}$ = 0,3 pF<br>$C_{31}$ = 0,3 pF<br>$C_{1G}$ = 2 pF |

## TABLEAU IV

| | | |
|---|---|---|
| $R_0$ ≃ 30 Ω | $R''_0$ ≃ 100 à 120 Ω | $V_{DD}$ = + 6 V |
| $C_0$ ≃ 1 pF | $C_0$ ≃ 60 à 100 pF | $V_G$ = + 3 V |

EP 0 563 370 B1

**Revendications**

1. Dispositif semiconducteur incluant plusieurs blocs fonctionnels de circuits intégrés, parmi lesquels au moins un bloc amplificateur, connectés entre eux, fonctionnant en hautes et hyperfréquences, avec des fréquences différentes, ces blocs comprenant au moins chacun une ligne de distribution de tension continue, des moyens de polarisation de chacun des blocs par la tension continue de sa ligne de distribution, ces blocs comprenant en outre des circuits accordés en puissance dans les domaines de fonctionnement hyperfréquences, ce dispositif comprenant des moyens pour intégrer tous les blocs fonctionnels hautes et hyperfréquences sur un même substrat, et en outre pour réaliser l'alimentation en continu de tous les blocs fonctionnels par une même et seule valeur de tension continue au moyen d'une même et seule ligne (100) de distribution de tension continue ($V_{DD}$) alors commune à tous les blocs, ces moyens incluant d'une part des circuits de stabilisation en fréquence appliqués à chacun du ou des blocs fonctionnels amplificateurs individuellement et en outre à la ligne de distribution de tension continue commune (100), et incluant d'autre part des circuits d'auto-polarisation pour constituer les moyens de polarisation de chacun des blocs par cette tension continue unique, caractérisé en ce que le circuit de stabilisation en fréquence appliqué à la ligne (100) de distribution de tension continue commune ($V_{DD}$) comprend au moins un filtre ($R_0$-$C_0$) appliqué à cette ligne, et en ce que, chaque bloc fonctionnel étant formé d'étages à transistors, les circuits de stabilisation en fréquence appliqués au(x) bloc(s) amplificateur(s) comprennent au moins un filtre ($R'_0$-$C'_0$, $R''_0$-$C''_0$) appliqué dans au moins un des étages à transistor dudit (desdits) bloc(c) amplificateur(s).

2. Dispositif selon la revendication 1, caractérisé en ce que dans un bloc amplificateur (RFA) travaillant en hyperfréquences, le circuit d'autopolarisation comprend une résistance ($R_1$) entre le drain des transistors ($T_1$, $T_2$, $T_3$, $T_4$) de chaque étage et la ligne commune pour fixer la tension de drain, une résistance ($R_2$) entre la source et la masse pour fixer la tension de source, et une connexion entre la grille et la masse pour fixer la tension de grille à zéro, et en ce qu'un découplage de source est réalisé par une capacité ($C_2$) disposée entre la source et la masse.

3. Dispositif selon la revendication 2, caractérisé en ce que, dans un bloc amplificateur (IFA) travaillant en hautes fréquences, le circuit d'autopolarisation comprend, sur un étage à transistor ($T_{2A}$), une charge active ($T_{1A}$) réalisée par un transistor à effet de champ placé entre le drain de ce transistor ($T_{2A}$) et la ligne commune (100), et la polarisation de ce transistor ($T_{1A}$) à tension grille-source nulle ($V_{GS} = 0$), et en ce que ce bloc amplificateur (IFA) comporte aussi au moins un filtre d'ajustage de sa fréquence ($R''_0$-$C''_0$).

4. Dispositif selon la revendication 3, caractérisé en ce que les circuits formant les blocs fonctionnels comprennent :

   - un amplificateur radiofréquence (RFA) fonctionnant dans le domaine des hyperfréquences,
   - un filtre passe-bande (BPF) ou passe-haut,
   - un mélangeur actif (M) convertisseur de fréquence,
   - un oscillateur local (LO.EXT ; LO.INT),
   - un filtre passe-bas (LPF),
   - et un amplificateur à fréquence intermédiaire (IFA) fonctionnant dans le domaine des hautes fréquences.

5. Dispositif selon la revendication 4, caractérisé en ce que dans le bloc fonctionnel formant le circuit amplificateur radiofréquence (RFA), le circuit de stabilisation en fréquence est un filtre passe-haut ($R'_0$ - $C'_0$) appliqué au drain des transistors ($T_1$, $T_2$, $T_3$, $T_4$) de chaque étage de l'amplificateur.

6. Dispositif selon la revendication 5, caractérisé en ce que le bloc fonctionnel formant le filtre passe-bande (BPF) comprend un premier circuit résonnant série ayant une self-inductance ($L_4$) et une capacité ($C_4$), et un deuxième circuit résonnant parallèle ayant une self-inductance ($L_3$) et une capacité ($C_3$), tous deux connectés entre la sortie de drain du dernier étage à transistor ($T_4$) de l'amplificateur radio-fréquences (RFA) et la masse, le premier et le second circuit résonnant à des fréquences très légèrement différentes, proches de la fréquence image du convertisseur.

7. Dispositif selon l'une des revendications 5 ou 6, caractérisé en ce que les moyens pour accorder les étages de l'amplificateur radiofréquences (RFA) en puissance incluent des self-inductances appliquées entre le drain des transistors de chaque étage et la masse et des self-inductances disposées entre chaque étage.

8. Dispositif selon l'une des revendications 6 à 7, caractérisé en ce que dans le bloc fonctionnel formant le circuit amplificateur à fréquence intermédiaire (IFA), la sortie du circuit amplificateur est appliquée sur undit premier étage tampon ayant un transistor haut ($T_{A1}$), et un transistor bas ($T_{A2}$) monté en source de courant avec sa grille polarisée à tension grille-source nulle ($V_{GS} = 0$) et en ce que le circuit de stabilisation en fréquence de ce bloc est un filtre passe-bas ($R''_0$ - $C''_0$) avec une résistance ($R''_0$) disposée entre le drain du transistor haut ($T_{A1}$) et la ligne d'alimentation commune (100), et une capacité ($C''_0$) entre le drain de ce transistor ($T_{A1}$) et la masse.

9. Dispositif selon la revendication 8, caractérisé en ce que dans le bloc fonctionnel formant le circuit amplificateur à fréquence intermédiaire (IFA), un étage tampon supplémentaire est disposé entre la sortie de l'amplificateur et ledit premier étage tampon, incluant un transistor haut ($T_{33A}$) monté en drain commun à la ligne commune et un transistor bas ($T_{34A}$) monté en source de courant avec sa grille polarisée à tension grille-source nulle ($V_{GS} = 0$).

10. Dispositif selon l'une des revendications 4 à 9, caractérisé en ce que dans le bloc mélangeur (M), le circuit d'auto-polarisation comprend une résistance ($R_{1M}$) non découplée pour fixer la tension de drain d'un étage à transistor ($T_M$), et une résistance ($R_{2M}$) pour fixer la tension de source, découplée par une branche comportant une résistance ($R'_0$) et une capacité ($C_{2M}$) en série, en ce que dans le bloc oscillateur local (LO.INT), le circuit d'autopolarisation comprend une résistance ($R_{1LO}$) non découplée pour fixer la tension de drain d'un étage à transistor ($T_{LO}$) et une résistance ($R_{2LO}$) pour fixer la tension de source, découplée par le montage en série, entre cette résistance et la masse, d'un circuit résonnant à la fréquence de l'oscillateur local contenant une capacité ($C'_{2LO}$) et une self-inductance ($L'_{2LO}$) en parallèle, et en ce que le bloc filtre passe-bas (LPF) comprend un circuit formé d'une self-inductance (LF) et d'une capacité (CF) en série entre la sortie du mélangeur (M) et la masse.

## Patentansprüche

1. Ein Halbleitergerät mit mehreren funktionellen Blöcken integrierter Schaltungen, worunter mindestens ein Verstärkerblock, die untereinander verbunden sind und mit unterschiedlichen Frequenzen in Hoch- und Hyperfrequenzen arbeiten, diese Blöcke beinhalten mindestens jeweils eine Gleichspannungsverteilungsleitung und Polarisierungsmittel für jeden der Blöcke über die Gleichspannung der Verteilungsleitung, diese Blöcke beinhalten zudem in den Bereichen der Hyperfrequenzfunktion leistungsangeglichene Schaltungen, das Gerät verfügt über Mittel für die Integration aller dieser Hoch- und Hyperfrequenzfunktionsblöcke auf einem einzigen Substrat, und außerdem beinhalten diese Mittel für den Erhalt der Gleichstromversorgung aller Funktionsblöcke mit einem einzigen Gleichspannungswert und einer einzigen, für alle Blöcke gemeinsamen Gleichspannungsverteilungsleitung ($V_{DD}$)(100) einerseits Stabilisierungsschaltungen für die den jeweiligen oder jedem der Verstärkerfunktionsblöcke zugeführten Frequenz, zusätzlich zu der gemeinsamen Gleichspannungsverteilungsleitung (100), und andererseits vollautomatische Polarisierungsschaltungen, um über diese einzige Gleichspannung die Polarisierungsmittel jedes Blocks zu bilden, mit dem Merkmal, daß die der Gleichspannungsverteilungsleitung ($V_{DD}$)(100) zugeführte Frequenzstabilisierungsschaltung mindestens einen dieser Leitung zugeführten Filter ($R_0$-$C_0$) enthält und daß jeder Funktionsblock aus Transistorstufen gebildet wird, während die dem (den) Verstärkerblock(blöcken) zugeführten Frequenzstabilisierungsschaltungen mindestens einen Filter ($R'_0$-$C'_0$, $R''_0$-$C''_0$) enthalten, der mindestens einer der Transistorstufen des (der) besagten Verstärkerblocks(blöcke) zugeführt wird.

2. Ein Gerät laut Anspruch 1, mit dem Merkmal, daß in einem in Hyperfrequenzen arbeitenden Verstärkerblock (RFA) die vollautomatische polarisierungsschaltung einen Widerstand ($R_1$) zwischen dem Drain des Transistors ($T_1$, $T_2$, $T_3$, $T_4$) jeder Stufe und der gemeinsamen Leitung für die Bestimmung der Drainspannung, einen Widerstand ($R_2$) zwischen der Source und der Masse für die Bestimmung der Spannung des Gitters auf Null enthält und von einer zwischen der Source und der Masse vorgesehenen Kapazität ($C_2$) eine Entkopplung vorgenommen wird.

3. Ein Gerät laut Anspruch 2, mit dem Merkmal, daß in einem in hohen Frequenzen arbeitenden Verstärkerblock (IFA) die vollautomatische Polarisierungsschaltung auf einer Transistorstufe ($T_{2A}$) eine aktive Ladung ($T_{1A}$) enthält, die von einem Transistor bewirkt wurde, der zwischen dem Drain dieses Transistors ($T_{2A}$) und der gemeinsamen Leitung (100) angebracht ist, die Polarisierung dieses Transistors ($T_{1A}$) mit einer Spannung Gitter-Source gleich Null ist ($V_{GS}$=0), und daß dieser Verstärkerblock (IFA) zusätzlich mindestens einen Filter für die Angleichung seiner Frequenz ($R''_0C''_0$) enthält.

4. Ein Gerät laut Anspruch 3, mit dem Merkmal, daß diese Funktionsblöcke bildende Schaltungen folgendes enthalten :

   - einen Funkfrequenzverstärker (RFA), der im Bereich der Hyperfrequenzen arbeitet,
   - einen Band- (BPF) oder Hochpaßfilter,
   - einen aktiven, Frequenzwandelnden Mischer (M),

- einen lokalen Oszillator (LO.EXT; LO.INT),
- einen Tiefpaßfilter (LPF) und
- einen Zwischenfrequenzverstärker (IFA), der im Bereich hoher Frequenzen arbeitet.

5. Ein Gerät laut Anspruch 4, mit dem Merkmal, daß in dem die Funkfrequenzverstärkerschaltung (RFA) bildenden Funktionsblock die Frequenzstabilisierungsschaltung ein Hochpaßfilter ($R'_0$-$C'_0$) ist, der dem Drain der Transistoren ($T_1$, $T_2$, $T_3$, $T_4$) jeder Verstärkerstufe zugeführt wird.

6. Ein Gerät laut Anspruch 5, mit dem Merkmal, daß der erste, den Bandfilter (BPF) bildende Funktionsblock eine erste Resonanzschaltung in Serie mit einer Selbstinduktivität ($L_4$) und einer Kapazität ($C_4$) enthält und eine zweite, parallele Resonanzschaltung, mit einer Selbstinduktivität ($L_3$) und einer Kapazität ($C_3$), beide angeschlossen zwischen dem Ausgang des Drains der ersten Transistorstufe ($T_4$) des Funkfrequenzverstärkers (RFA) und der Masse, wobei die erste und die zweite Resonanzschaltungen leicht unterschiedliche Frequenzen aufweisen, nahe der Bildfrequenz des Wandlers.

7. Ein Gerät laut einem der Ansprüche 5 oder 6, mit dem Merkmal, daß die Mittel für die Gewährung der Stufen des Funkfrequenzleistungsverstärkers (RFA) Selbstinduktivitäten beinhalten, die zwischen jeder Stufe vorgesehen sind.

8. Ein Gerät laut einem der Ansprüche 6 bis 7, mit dem Merkmal, daß in dem Funktionsblock, der die Zwischenfrequenzverstärkerschaltung (IFA) bildet, der Ausgang der Verstärkerschaltung einer besagten ersten Pufferstufe mit einem hohen ($T_{A1}$) und einem niederen Transistor ($T_{A2}$) zugeführt wird, angebracht an der Source des Stroms, mit einem polarisierten Gitter der Spannung Gitter-Source gleich Null ($V_{GS}=0$), und daß die Frequenzstabilisierungsschaltung dieses Blocks ein Tiefpaßfilter ($R''_0$-$C''_0$) ist, mit einem Widerstand ($R''_0$), vorgesehen zwischen dem Drain des hohen Transistors ($T_{A1}$) und der gemeinsamen Versorgungsleitung (100), und einer Kapazität ($C''_0$) zwischen diesem Transistor ($T_{A1}$) und der Masse.

9. Ein Gerät laut Anspruch 8, mit dem Merkmal, daß in diesem die Zwischenfrequenzschaltung (IFA) bildenden Funktionsblock eine zusätzliche Stufe vorgesehen ist, angebracht zwischen dem Ausgang des Verstärkers und der besagten ersten Pufferstufe, mit einem hohen Transistor ($T_{33A}$), am Drain der gemeinsamen Versorgungsleitung angebracht, und einen niederen Transistor ($T_{34A}$), an der Source des Stroms angebracht, mit einem polarisierten Gitter der Spannung Gitter-Source gleich Null ($V_{GS}=0$).

10. Ein Gerät laut einem der Ansprüche 4 bis 9, mit dem Merkmal, daß in dem Mischerblock (M) die vollautomatische Polarisierungsschaltung einen nicht gekoppelten Widerstand ($R_{1M}$) enthält, um die Spannung des Drains einer Transistorstufe ($T_M$) zu bestimmen, und einen Widerstand ($R_{2M}$), um die Spannung der Source zu bestimmen, entkoppelt über einen Zweig mit einem Widerstand ($R'_0$) und einer Kapazität ($C_{2M}$) in Serie, daß in dem Block des lokalen Oszillators (LO.INT) die vollautomatische Polarisierungsschaltung einen nicht gekoppelten Widerstand ($R_{1LO}$) für die Bestimmung der Spannung des Drains einer Transistorstufe ($T_{LO}$) und einen Widerstand ($R_{2LO}$) enthält, um die Spannung der Source zu bestimmen, entkoppelt über den Einbau in Serie zwischen diesem Widerstand und der Masse einer Resaonanzschaltung mit der Frequenz des lokalen Oszillators mit einer parallel geschalteten Kapazität ($C'_{2LO}$) und einer Selbstinduktivität ($L'_{2LO}$), und daß der Tiefpaßfilterblock (LPF) eine Schaltung beinhaltet, gebildet aus einer Selbstinduktivität (LF) und einer Kapazität (CF) in Serie zwischen dem Ausgang des Mischers (M) und der Masse.

## Claims

1. A semiconductor device including a plurality of interconnected functional blocks of integrated circuits, inter alia at least an amplifier block, operating at high and ultrahigh frequencies and at different frequencies, each block comprising at least a DC distribution line, means for biasing each block by means of the DC voltage of its distribution line, said blocks also comprising power-matched circuits operating in the ultrahigh frequency range, this device comprising means for integrating all of the high frequency and ultrahigh frequency functional blocks on one and the same substrate and for realising the DC supply of all functional blocks at one and the same DC voltage value by means of one and the same DC voltage ($V_{DD}$) distribution line (100) which is common to all of the blocks, these means including frequency stabilization circuits for each individual functional amplifier block and also for the common DC voltage distribution line (100), as well as self-biasing circuits for constituting the means for biasing each block by means of said single DC voltage, characterized in that the frequency stabilization circuit for the common DC voltage ($V_{DD}$) distribution line (100) comprises at least a filter ($R_0$-$C_0$) for said line, and in that in each functional block formed by transistor stages the frequency stabilization circuits for the amplifier block(s) comprise at least a filter ($R'_0$-$C'_0$, $R''_0$-$C''_0$) in at least one of the transistor stages of said amplifier block(s).

2.  A device as claimed in Claim 1, characterized in that in an amplifier block (RFA) operating at ultrahigh frequencies the self-biasing circuit comprises a resistor ($R_1$) between the drain of the transistors ($T_1$, $T_2$, $T_3$, $T_4$) of each stage and the common line for determining the drain voltage, a resistor ($R_2$) between the source and ground for determining the source voltage, and a connection between the gate and ground for determining the zero gate voltage, and in that the source is decoupled by means of a capacitance ($C_2$) arranged between the source and ground.

3.  A device as claimed in Claim 2, characterized in that in an amplifier block (IFA) operating at high frequencies the self-biasing circuit comprises, in a transistor stage ($T_{2A}$), an active charge ($T_{1A}$) realised by a field effect transistor arranged between the drain of said transistor ($T_{2A}$) and the common line (100) and the biasing of said transistor ($T_{1A}$) at the zero gate-source voltage ($v_{GS} = 0$), and in that said amplifier block (IFA) also comprises at least a filter for adjusting its frequency ($R''_0$-$C''_0$).

4.  A device as claimed in Claim 3, characterized in that the circuits constituting the functional blocks comprise:

    -   a radio frequency amplifier (RFA) operating in the ultrahigh frequency range,
    -   a bandpass (BPF) or high-pass filter,
    -   an active mixer (M) for converting the frequency,
    -   a local oscillator (LO.EXT; LO.INT),
    -   a low-pass filter (LPF),
    -   and an intermediate frequency amplifier (IFA) operating in the high frequency range.

5.  A device as claimed in Claim 4, characterized in that in the functional block constituting the radio frequency amplifier circuit (RFA) the frequency stabilization circuit is a high-pass filter ($R'_0$-$C'_0$) connected to the drain of the transistors ($T_1$, $T_2$, $T_3$, $T_4$) of each amplifier stage.

6.  A device as claimed in Claim 5, characterized in that the functional block constituting the bandpass filter (BPF) comprises a first series resonant circuit having an inductance ($L_4$) and a capacitance ($C_4$), and a second parallel resonant circuit having an inductance ($L_3$) and a capacitance ($C_3$), the two circuits being connected between the output of the drain of the last radio frequency amplifier (RFA) transistor stage ($T_4$) and ground, the first and the second circuit resonating at frequencies which are slightly different and are close to the picture frequency of the converter.

7.  A device as claimed in Claim 5 or 6, characterized in that the means for power matching the RF amplifier stages (RFA) include inductances connected between the drain of the transistors of each stage and ground, and inductances arranged between each stage.

8.  A device as claimed in any one of Claims 6 to 7, characterized in that in the functional block constituting the intermediate frequency amplifier circuit (IFA) the output of the amplifier circuit is connected to a first buffer stage having a high value transistor ($T_{A1}$), and a low value transistor ($T_{A2}$) arranged as a current source and having its gate biased at the zero gate-source voltage ($V_{GS} = 0$), and in that the frequency stabilization circuit of said block is a low-pass filter ($R''_0$-$C''_0$) with a resistor ($R''_0$) arranged between the drain of the high value transistor ($T_{A1}$) and the common supply line (100), and a capacitance ($C''_0$) between the drain of said transistor ($_{A1}$) and ground.

9.  A device as claimed in Claim 8, characterized in that in the functional block constituting the intermediate frequency amplifier circuit (IFA) a supplementary buffer stage is arranged between the output of the amplifier and said first buffer stage including a high value transistor ($T_{33A}$) connected in common drain configuration to the common line and a low value transistor ($T_{34A}$) arranged as a current source with its gate biased at the zero gate-source voltage ($V_{GS} = 0$).

10. A device as claimed in any one of Claims 4 to 9, characterized in that in the mixer block (M) the self-biasing circuit comprises a resistor ($R_{1M}$) which is not decoupled for determining the drain voltage of a transistor stage ($T_M$) and a resistor ($R_{2M}$) for determining the source voltage, which resistor is decoupled by means of a branch comprising a resistor ($R'_O$) and a capacitance ($C_{2M}$) in series, in that in the local oscillator block (LO.INT) the self-biasing circuit comprises a resistor ($R_{1LO}$) which is not decoupled for determining the drain voltage of a transistor stage

($T_{LO}$) and a resistor ($R_{2LO}$) for determining the source voltage, which resistor is decoupled by means of the series arrangement between said resistor and ground, a circuit resonating at the local oscillator frequency and comprising a capacitance ($C'_{2LO}$) and an inductance ($L'_{2LO}$) in parallel, and in that the low-pass filter block (LPF) comprises a circuit constituted by an inductance (LF) and a capacitance (CF) arranged in series between the output of the mixer (M) and ground.

FIG. 1

EP 0 563 370 B1

FIG.2b

FIG.2a

FIG. 2c

EP 0 563 370 B1

FIG.3b

FIG.3a

EP 0 563 370 B1

FIG. 3c

20

FIG. 4a

FIG. 4b